# EUROPÄISCHE PATENTANMELDUNG

(11) **EP 2 535 619 A2**
(43) Veröffentlichungstag der Anmeldung: **19.12.2012**
(21) Anmeldenummer: 12166718.2
(22) Anmeldetag: 04.05.2012
(51) Int. Cl.: F16H 61/18

(54) **Vorrichtung für ein Handschaltgetriebe**

(30) Priorität: 16.06.2011 DE 102011077653
(71) Anmelder: ZF Friedrichshafen AG, 88038 Friedrichshafen (DE)
(72) Erfinder: Retsch, Matthias, 14776 Brandenburg (DE); Koppe, Thomas, 14776 Brandenburg (DE)

(57) **Zusammenfassung**

Es wird eine Vorrichtung (1) für ein Handschaltgetriebe, in dem ein vordefinierter Übersetzungswechsel durch eine definierte Drehbewegung einer Schaltwelle (2) durchführbar ist, beschrieben. Eine Aktuatoreinrichtung (9) verhindert in einem ersten Betriebszustand den vordefinierten Übersetzungswechsel und lässt diesen in einem zweiten Betriebszustand zu. Der vordefinierte Übersetzungswechsel wird durch Herstellen einer die definierte Drehbewegung der Schaltwelle (2) verhindernden Wirkverbindung zwischen der Aktuatoreinrichtung (9) und der Schaltwelle (2) derart unterbunden, dass im ersten Betriebszustand der Aktuatoreinrichtung (9) ein verschiebbar ausgeführtes Betätigungselement der Aktuatoreinrichtung (9) in ein Langloch (18) eingreift, das in einem fest mit der Schaltwelle (2) verbundenen Abschnitt (19) vorgesehen ist, oder das verschiebbar ausgeführte Betätigungselement der Aktuatoreinrichtung an einer Fläche eines im Bereich einer Mantelfläche der Schaltwelle fest vorgesehenen Abschnittes in Anlage ist, oder dass ein über ein verschiebbar ausgeführtes Betätigungselement der Aktuatoreinrichtung verschwenkbares erstes Hebelelement mit einem ersten Bereich der Schaltwelle in Wirkverbindung steht.

## Beschreibung

Die Erfindung betrifft eine Vorrichtung für ein Handschaltgetriebe gemäß der im Oberbegriff des Patentanspruches 1, 3 und 5 näher definierten Art.

Zur Bedienung von aus der Praxis bekannten Handschaltgetrieben mit fünf oder sechs Gängen für Vorwärtsfahrt und wenigstens einem Gang für Rückwärtsfahrt werden üblicherweise so genannte H-Schemata verwendet, die mehrere beabstandete und parallel zueinander angeordnete Wählgassen umfassen und über Bereiche miteinander verbunden sind. In den H-Schemata ist jeweils ein von einem Fahrer bedienbarer Wählhebel in den Bereichen jeweils zu den Wählgassen durch seitliches Verschieben des Wählhebels in Fahrzeugquerrichtung führbar, wobei der Wählhebel zum Einlegen eines Ganges über eine zur seitlichen Bewegung in den Bereichen im Wesentlichen vertikal gerichteten Bewegung bzw. über eine in Fahrzeuglängsrichtung gerichtete Bewegung des Wählhebels in jeweils einer Wählgasse vom Fahrer zu führen ist. Um bei ausgelegtem Gang im Handschaltgetriebe und nicht fahrerseitig betätigtem Wählhebel einen definierten Betriebszustand zur Verfügung zu stellen, wird der Wählhebel bei ausgelegtem Gang im Handschaltgetriebe durch entsprechende Einrichtungen in eine definierte Neutralstellung überführt, die in einem Übergang zwischen den Bereichen der H-Schemata und einer definierten Wählgasse vorgesehen ist. Üblicherweise liegt die Neutralstellung des Wählhebels im Übergang zwischen den Bereichen der H-Schemata und der Wählgasse, in der ein dritter und vierter Gang für Vorwärtsfahrt im Handschaltgetriebe einlegbar ist, weshalb diese Wählgasse auch als Neutralgasse bezeichnet wird.

Damit Antriebsmaschinen von Fahrzeugen, wie Benzin- oder Dieselbrennkraftmaschinen, über einen großen Betriebsbereich in einem verbrauchsoptimierten Betriebszustand betrieben werden können, wird eine möglichst hohe Anzahl der jeweils über ein Handschaltgetriebe zur Verfügung stehenden Gänge angestrebt. Diese Vorgabe wird über Automatik- und Doppelkupplungsgetriebe mit sieben und mehr Gängen für Vorwärtsfahrt umgesetzt. Im Personenkraftwagenbereich sind Handschaltgetriebe mit mehr als sechs Gängen für Vorwärtsfahrt derzeit eher unüblich, da bei Handschaltgetrieben mit mehr als sechs Gangstufen gegenüber herkömmlichen H-Schemata mit vier parallel zueinander angeordneten und miteinander verbundenen Wählgassen zumindest eine zusätzliche fünfte Wählgasse im H-Schema vorzusehen ist.

Derartige H-Schemata sind für Fahrer jedoch nur bedingt in zufriedenstellendem Umfang bedienbar, da ein Fahrer die jeweils gewünschte Wählgasse nur mit hoher Konzentration anwählen kann, was während Fahrten anspruchsvoller Fahrstrecken, wie kurvigen Bergfahrten und dergleichen, hohe Anforderungen an einen Fahrer stellt. Führt der Fahrer den Wählhebel nicht zu der gewünschten Wählgasse, besteht die Möglichkeit einer Fehlschaltung, die durch eine anschließende weitere Schaltung durch den Fahrer korrigiert werden muss. Dies führt unter Umständen zu einem unerwünschten Zugkraftverlust, der von einem Fahrer nicht akzeptiert wird.

Um solche Fehlschaltungen mit H-Schemata, die mit mehr als vier parallel nebeneinander angeordneten Wählgassen ausgeführt sind, zu vermeiden, ist eine definierte und wahrnehmbare Abtrennung der zumindest jeweils außen liegenden Wählgassen für einen Rückwärtsgang sowie für einen siebten und höheren Gang von den zur Neutralgasse benachbarten Wählgassen, in welchen ein erster und zweiter Gang für Vorwärtsfahrt oder ein fünfter und sechster Gang für Vorwärtsfahrt einlegbar ist, von großer Bedeutung. Zusätzlich ist aber auch die intuitive Bedienung des H-Schemas in gleichem Umfang zu gewährleisten wie die Verschaltsicherheit bei unterschiedlichen Schaltgeschwindigkeiten und Schaltkräften.

Aus der Praxis sind verschiedene Konzepte bekannt, über die ein ungewolltes Auswählen definierter Wählgassen während einer fahrerseitigen Betätigung eines Wählhebels vermieden werden sollen.

Eines dieser Konzepte sieht vor, dass der Wählhebel von einem Fahrer erst nach Überwinden eines definierten Wählkraftniveaus in einen definierten Bereich bzw. eine definierte Wählgasse eines H-Schaltschemas überführbar ist. Das Wählkraftniveau wird über eine so genannte Schlagsperre durch einen Anschlag, Federelemente oder Rastierungskonturen zur Verfügung gestellt, wobei das Wählkraftniveau durch dynamisches Schlagen des Wählhebels gegen die Schlagsperre vom Fahrer zu überwinden ist.

Dieses Konzept wird oftmals zur Abgrenzung der Wählgasse von den weiteren Wählgassen vorgesehen, in der ein Rückwärtsgang im Handschaltgetriebe einlegbar ist. Damit ist der Rückwärtsgang erst nach Überwindung einer Schlagsperre mit einer steilen Kraftrampe bei gleichzeitig hohem Niveau im Wählkraftverlauf ausgehend von einer weiteren Wählgasse, wie der Wählgasse, in der der erste und zweite Gang für Vorwärtsfahrt auswählbar sind, in Richtung der Wählgasse, in der der Gang für Rückwärtsfahrt auswählbar ist, vom Fahrer einlegbar. Eine solche Schlagsperre zur Abgrenzung des Rückwärtsganges wird von einem Fahrer aufgrund der geringeren Schalthäufigkeit in Richtung des Rückwärtsganges akzeptiert.

Sind jedoch zum Einlegen von Vorwärtsgängen ebenfalls derartig hohe Schaltkräfte vom Fahrer aufzubringen, wird dies von einem Fahrer als nicht komfortabel empfunden. Um die Komforteinbußen auf ein Minimum zu reduzieren, besteht die Möglichkeit, das Schlagsperrenniveau zu reduzieren. Bei mittlerer bis hoher Dynamik des Schaltablaufes ist das Schlagsperren zur Verhinderung einer Fehlschaltung unter Umständen nicht ausreichend und die Schlagsperre wird sozusagen überrannt, womit eine Verschaltsicherheit nicht in gewünschtem Umfang zur Verfügung steht.

Weitere Konzepte zur Vermeidung von Fehlschaltungen im Betrieb eines Fahrzeuges weisen Sperreinrichtungen, wie Tauch-Drucksperren, Ziehringsperren oder weitere Sperreinrichtungen, auf, die per Druckknopf oder über einen Drucktaster entriegelbar sind.

Eine solche Sperreinrichtung ist aus der DE 10 2008 017 408 A1 bekannt, bei der ein vordefinierter Übersetzungswechsel mit einer definierten translatorischen Bewegung einer Schaltwelle und einer zusätzlichen Drehbewegung der Schaltwelle einhergeht, wobei diese Bewegungen der Schaltwelle von einem fahrerseitig betätigbaren Wählhebel ausgehen. Über eine Aktoreinrichtung wird in einem ersten Betriebszustand der Aktoreinrichtung der vordefinierte Übersetzungswechsel verhindert und in einem zweiten Betriebszustand zugelassen. Die Aktoreinrichtung sperrt die für die Durchführung des vordefinierten Übersetzungswechsels erforderliche translatorische Bewegung der Schaltwelle im ersten Betriebszustand über eine formschlüssige Verbindung zwischen der Aktoreinrichtung und der Schaltwelle.

Des Weiteren sind aus der Praxis Konzepte mit so genannten zeitlich verzögert wirkenden Sperren bekannt, die mit einem hydraulischen oder pneumatischen Dämpfersystem ausgeführt sind, um eine definierte und wahrnehmbare Abtrennung von in Bezug auf die Neutralgasse jeweils außen liegenden Wählgassen von der Neutralgasse und zu der Neutralgasse benachbarten Wählgassen zur Verfügung stellen zu können.

Zeitlich verzögert wirkende Sperrsysteme weisen neben einer hohen konstruktiven Komplexität nachteilhafterweise eine temperaturabhängige Funktionalität auf, die aus der sich temperaturabhängig stark ändernden Viskosität des verwendeten Mediums im Dämpfer resultiert und die eine unerwünscht hohe Veränderung der fahrerseitig aufzubringenden Schaltkräfte zur Folge hat.

Weitere Konzepte sind mit so genannten statischen Sperren ausgebildet, die durch Einlegen bestimmter Gänge entriegelt werden. Ziel solcher Lösungen ist es, einen bestimmten Gang erst dann einlegen zu können, wenn ein oder beide Gänge in einer Nachbargasse bereits eingelegt wurden. Derartige Konzepte werden sowohl für Hochschalt- als auch für Rückschaltverhinderungen eingesetzt, wobei statische Sperren Mehrfachhoch- und/oder Mehrfachrückschaltungen nur bedingt erlauben, was ebenfalls von einem Fahrer als nicht praktikabel empfunden wird.

Der vorliegenden Erfindung liegt die Aufgabe zugrunde, eine konstruktiv einfache und mit hohem Schaltkomfort betätigbare Vorrichtung für ein Handschaltgetriebe zur Verfügung zu stellen, mittels welcher eine definierte und wahrnehmbare Abtrennung außen liegender Wählgassen realisierbar ist.

Erfindungsgemäß wird diese Aufgabe mit einer Vorrichtung mit den Merkmalen des Patentanspruches 1, 3 oder 5 gelöst.

Bei der erfindungsgemäßen Vorrichtung für ein Handschaltgetriebe, in der ein vordefinierter Übersetzungswechsel durch eine definierte Drehbewegung einer Schaltwelle durchführbar ist, ist eine Aktuatoreinrichtung vorgesehen, die in einem ersten Betriebszustand den vordefinierten Übersetzungswechsel verhindert und in einem zweiten Betriebszustand den vordefinierten Übersetzungswechsel zulässt.

Bei einer ersten alternativen Ausführungsform der erfindungsgemäßen Vorrichtung wird der vordefinierte Übersetzungswechsel durch Herstellen einer die definierte Drehbewegung der Schaltwelle verhindernden Wirkverbindung zwischen der Aktuatoreinrichtung und der Schaltwelle derart unterbunden, dass im ersten Betriebszustand der Aktuatoreinrichtung ein verschiebbar ausgeführtes Betätigungselement der Aktuatoreinrichtung in ein Langloch eingreift, das in einem fest mit der Schaltwelle verbundenen Abschnitt vorgesehen ist.

Mit dieser konstruktiv einfach und kostengünstig herstellbaren Ausführungsform ist eine definierte und wahrnehmbare Abtrennung außen liegender Wählgassen von einer Neutralgasse und zu dieser benachbart ausgeführten Wählgassen ohne Komforteinbußen durchführbar, da während nicht gesperrten Schaltvorgängen von einem Fahrer nur geringe und im Wesentlichen temperaturunabhängige Schaltkräfte aufzubringen sind, während der definierte Übersetzungswechsel in Abhängigkeit des Betriebszustandes der Aktuatoreinrichtung verhindert oder zugelassen wird.

Die über die Aktuatoreinrichtung gesperrte Wählgasse oder auch mehrere gesperrte Wählgassen ist oder sind auf einfache Art und Weise beispielsweise über eine fahrerseitige Anforderung und einen damit verbundenen Betriebszustandswechsel der Aktuatoreinrichtung vom ersten Betriebszustand in den zweiten Betriebszustand oder in umgekehrter Richtung freigebbar oder sperrbar.

Bei einer vorteilhaften Weiterbildung der ersten alternativen Ausführungsform der erfindungsgemäßen Vorrichtung ist ein zweites Langloch in einem weiteren mit der Schaltwelle fest verbundenen Abschnitt vorgesehen, in das das Betätigungselement im ersten Betriebszustand der Aktoreinrichtung zur Verhinderung eines weiteren vordefinierten Übersetzungswechsels eingreift. Diese Weiterbildung stellt eine so genannte selektiv sperrende Vorrichtung dar, bei welcher Hoch- und Rückschaltungen jeweils nur in einem bestimmten Bereich des H-Schemas zugelassen werden, wobei die Selektion in Abhängigkeit des jeweils vorliegenden Betriebszustandes der Aktuatoreinrichtung erreicht wird.

Eine zweite alternative Ausführungsform der erfindungsgemäßen Vorrichtung sieht vor, den vordefinierten Übersetzungswechsel durch Herstellen einer die definierte Drehbewegung der Schaltwelle verhindernden Wirkverbindung zwischen der Aktuatoreinrichtung und der Schaltwelle derart zu verhindern, indem im ersten Betriebszustand der Aktuatoreinrichtung ein über ein verschiebbar ausgeführtes Betätigungselement der Aktuatoreinrichtung verschwenkbares erstes Hebelelement mit einem ersten Bereich der Schaltwelle in Wirkverbindung gebracht wird, wobei zusätzlich ein weiterer vordefinierter Übersetzungswechsel im Handschaltgetriebe im zweiten Betriebszustand der Aktuatoreinrichtung dadurch gesperrt wird, dass ein mit dem Betätigungselement verbundenes zweites Hebelelement mit einem zweiten Bereich der Schaltwelle in Wirkverbindung steht und die damit korrespondierende Drehbewegung der Schaltwelle verhindert.

Die zweite alternative Ausführungsform stellt eine konstruktiv einfach und kostengünstig herstellbare sowie selektiv wirkende Schaltsperre dar, mit der eine definierte und wahrnehmbare Abtrennung außen liegender Wählgassen von einer Neutralgasse und zu dieser benachbart ausgeführten Wählgassen ohne Komforteinbu-ßen gewährleistet ist. Zur Durchführung nicht gesperrter Schaltvorgänge sind von einem Fahrer nur geringe und im Wesentlichen temperaturunabhängige Schaltkräfte aufzubringen, während sowohl der definierte Übersetzungswechsel als auch der weitere definierte Übersetzungswechsel in Abhängigkeit des Betriebszustandes der Aktuatoreinrichtung verhindert oder zugelassen werden. Zusätzlich sind im Bereich der Aktuatoreinrichtung wirkende Kräfte durch die Zwischenschaltung von Hebelelementen, die eine indirekte Interaktion zwischen der Aktuatoreinrichtung und der Schaltwelle ermöglichen, auf konstruktiv einfache Art und Weise reduziert.

Bei einer dritten alternativen Ausführungsform der erfindungsgemäßen Vorrichtung wird der vordefinierte Übersetzungswechsel durch Herstellen einer die definierte Drehbewegung der Schaltwelle verhindernden Wirkverbindung zwischen der Aktuatoreinrichtung und der Schaltwelle derart unterbunden, dass im ersten Betriebszustand der Aktuatoreinrichtung ein verschiebbar ausgeführtes Betätigungselement der Aktuatoreinrichtung an einer Fläche eines im Bereich einer Mantelfläche der Schaltwelle fest vorgesehenen Abschnittes in Anlage ist. Die dritte alternative Ausführungsform der erfindungsgemäßen Vorrichtung weist ebenfalls einen einfachen konstruktiven Aufbau auf, um eine definierte und wahrnehmbare Abtrennung außen liegender Wählgassen von einer Neutralgasse und zu dieser benachbart ausgeführten Wählgassen ohne Komforteinbußen zur Verfügung zu stellen. Während nicht gesperrter Schaltvorgänge sind auch hier von einem Fahrer nur geringe und im Wesentlichen temperaturunabhängige Schaltkräfte aufzubringen, während der definierte Übersetzungswechsel in Abhängigkeit des Betriebszustandes der Aktuatoreinrichtung verhindert oder zugelassen wird.

Sowohl die in den Patentansprüchen angegebenen Merkmale als auch die in den nachfolgenden Ausführungsbeispielen der erfindungsgemäßen Vorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen de erfindungsgemäßen Vorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine stark schematisierte Darstellung einer ersten Ausführungsform der erfindungsgemäßen Vorrichtung in einem ersten Betriebzustand einer Aktuatoreinrichtung, in der ein vordefinierter Übersetzungswechsel durch eine definierte Drehbewegung einer Schaltwelle verhindert ist;
- Fig. 2: eine Fig. 1 entsprechende Darstellung der ersten Ausführungsform der erfindungsgemäßen Vorrichtung in einem zweiten Betriebszustand der Aktuatoreinrichtung, zu dem der vordefinierte Übersetzungswechsel zugelassen ist;
- Fig. 3: eine Fig. 1 entsprechende Darstellung einer zweiten Ausführungsform der erfindungsgemäßen Vorrichtung in einem ersten Betriebszustand der Aktuatoreinrichtung;
- Fig. 4: die Vorrichtung gemäß Fig. 3 in einer Seitenansicht;
- Fig. 5: ein H-Schema mit fünf Wählgassen, wobei eine im ersten Betriebszustand der Aktuatoreinrichtung der Vorrichtung 1 gemäß Fig. 3 gesperrte Wählgasse strichpunktiert dargestellt ist;
- Fig. 6: das H-Schema gemäß Fig. 5, wobei die im zweiten Betriebszustand der Aktuatoreinrichtung der Vorrichtung 1 gemäß Fig. 3 freigegebene Wählgasse mit durchgezogener Linie dargestellt ist;
- Fig. 7: eine Fig. 1 entsprechende Darstellung einer dritten Ausführungsform der erfindungsgemäßen Vorrichtung in einem ersten Betriebszustand der Aktuatoreinrichtung; und
- Fig. 8: eine Fig. 7 entsprechende Darstellung der dritten Ausführungsform der erfindungemäßen Vorrichtung in einem zweiten Betriebszustand der Aktuatoreinrichtung.

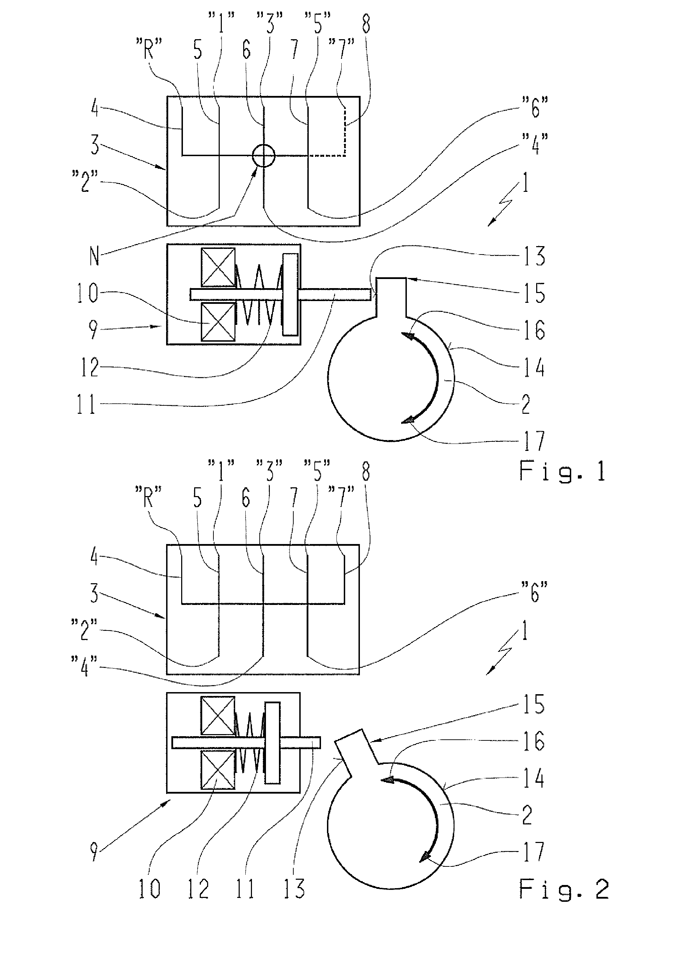

Fig. 1 zeigt eine stark schematisierte Darstellung einer Vorrichtung 1 für ein Handschaltgetriebe, in dem ein vordefinierter Übersetzungswechsel durch eine definierte Drehbewegung einer Schaltwelle 2 durchführbar ist. Im Handschaltgetriebe sind vorliegend sieben Übersetzungen bzw. Gänge "1" bis "7" für Vorwärtsfahrt und ein Gang "R" für Rückwärtsfahrt einlegbar. Hierfür ist ein in der Zeichnung nicht näher dargestellter und in an sich bekannter Art und Weise fahrerseitig betätigbarer Wählhebel innerhalb eines in Fig. 1 schematisch gezeigten H-Schemas 3 in die jeweils betreffende Wählgasse 4 bis 8 in Fahrzeugquerrichtung zu verschieben und zum Einlegen des gewünschten Ganges "1" bis "7" oder "R" in der jeweiligen Wählgasse 4 bis 8 in Fahrzeuglängsrichtung zu verstellen.

Zu der in Fig. 1 dargestellten Drehstellung der Schaltwelle 2 befindet sich der Wählhebel in der vierten Wählgasse 7, von der ausgehend die fünfte Wählgasse 8 oder die dritte Wählgasse 6 anfahrbar ist, wobei die mit einem Anfahren der fünften Wählgasse 8 einhergehende Drehbewegung der Schaltwelle 2 durch den Pfeil 16 und eine durch das Anfahren der dritten Wählgasse 6 einhergehende Drehbewegung der Schaltwelle 2 durch einen Pfeil 17 in Fig. 1 näher bezeichnet ist.

Ist im Handschaltgetriebe kein Gang eingelegt und wird der Wählhebel vom Fahrer nicht betätigt, wird der Wählhebel durch an sich bekannte Mechanismen in Richtung der eine so genannte Neutralgasse darstellenden Wählgasse 6 verstellt, wobei die durch die Mechanismen vordefinierte Neutralposition des Wählhebels in Fig. 1 unter dem Bezugszeichen N näher gekennzeichnet ist.

Während der Durchführung des vordefinierten Übersetzungswechsels wird der Wählhebel in die Wählgasse 8 des H-Schemas geführt, die zwei Wählgassen außerhalb der Neutralgasse 6 liegt.

Die eine fremdbetätigte Wählsperre darstellende Vorrichtung 1 umfasst vorliegend eine elektromechanische Aktuatoreinrichtung 9 mit einem Elektromagneten 10, über den bei entsprechender Bestromung ein Betätigungselement 11 ausgehend von der in Fig. 1 gezeigten Position entgegen einer Federeinrichtung 12 in die in Fig. 2 dargestellte Position in axialer Richtung verstellbar ist, wobei die axiale Position des Betätigungselementes 11 einem ersten Betriebszustand der Aktoreinrichtung 9 entspricht, während die in Fig. 2 gezeigte axiale Position des Betätigungselementes 11 zu einem zweiten Betriebszustand der Aktuatoreinrichtung 9 äquivalent ist.

Im ersten Betriebszustand der Aktuatoreinrichtung 9 wird der in Fig. 1 strichliert ausgeführte Bereich des H-Schemas 3, der die fünfte Wählgasse 8 umfasst, durch Anlage des Betätigungselementes 11 an einer Fläche 13 eines im Bereich einer Mantelfläche 14 der Schaltwelle 2 fest vorgesehenen Abschnittes 15 dadurch gesperrt, dass die zum Anfahren der fünften Wählgasse 8, in der der siebte Gang "7" für Vorwärtsfahrt im Handschaltgetriebe einlegbar ist, erforderliche definierte Drehbewegung der Schaltwelle 2 in Richtung des Pfeils 16 durch das Betätigungselement 11 nicht ausführbar ist. Im zweiten Betriebszustand der Aktuatoreinrichtung 9 ist die vordefinierte Drehbewegung der Schaltwelle 2 in Richtung des Pfeils 16 vom Betätigungselement 11 freigegeben und die fünfte Wählgasse 8 des H-Schemas 3 fahrerseitig über den Wählhebel anfahrbar sowie der siebte Gang "7" im Handschaltgetriebe einlegbar.

Die Aktuatoreinrichtung 9 ist vom ersten Betriebszustand in den zweiten Betriebszustand über eine fahrerseitige Betätigung eines im Fahrzeuginnenraum angeordneten Schalters oder dergleichen überführbar, womit einem Fahrer eines mit dem Handschaltgetriebe ausgeführten Fahrzeuges die Möglichkeit eröffnet ist, darüber zu entscheiden, ob der siebte Gang "7" für Vorwärtsfahrt einlegbar ist oder nicht.

Ein Betriebszustandswechsel der Aktoreinrichtung 9 ausgehend vom zweiten Betriebszustand in den ersten Betriebszustand findet beispielsweise dann statt, wenn der Wählhebel in die dritte Wählgasse 6 überführt wird, um bei einer anschlie-ßenden Hochschaltung, bei der der Wählhebel in Richtung der vierten Wählgasse 7 und der fünften Wählgasse 8 vom Fahrer geführt wird, eine Fehlschaltung ausgehend vom dritten Gang "3" oder vom vierten Gang "4" direkt in den siebten Gang "7" zu vermeiden.

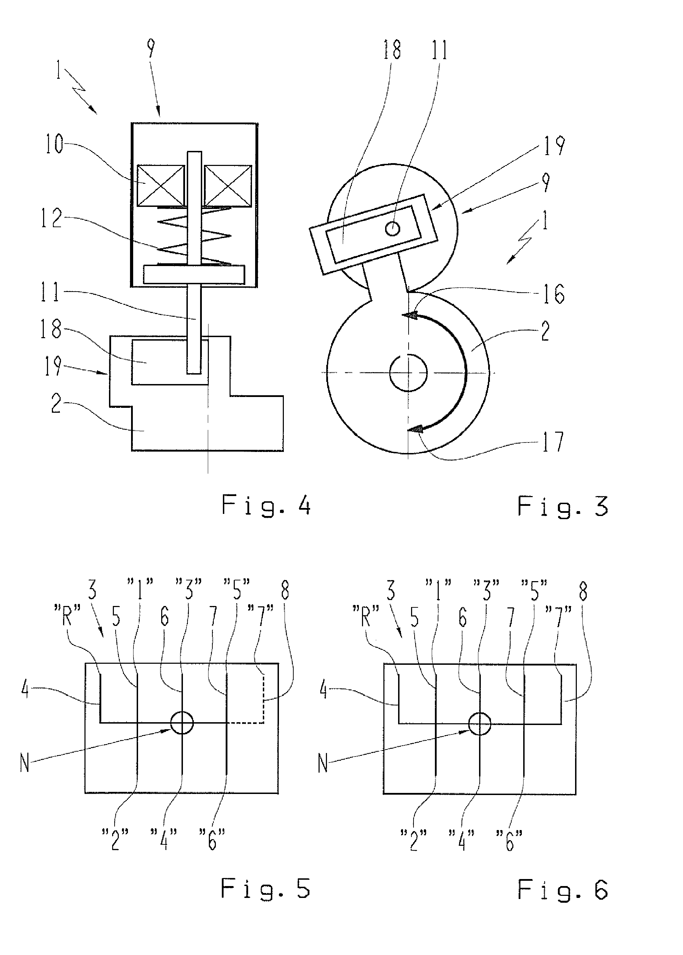

Fig. 3 zeigt eine im Wesentlichen Fig. 1 entsprechende Darstellung einer zweiten Ausführungsform der Vorrichtung 1, die sich von dem in Fig. 1 und Fig. 2 gezeigten ersten Ausführungsbeispiel der Vorrichtung 1 nur in Teilbereichen unterscheidet, weshalb in der nachfolgenden Beschreibung zu Fig. 3 und Fig. 4 im Wesentlichen lediglich auf die Unterschiede näher eingegangen wird und bezüglich der weiteren Funktionsweise der Vorrichtung 1 gemäß Fig. 3 und Fig. 4 auf die vorstehende Beschreibung zu Fig. 1 und Fig. 2 verwiesen wird.

Bei der Vorrichtung 1 gemäß Fig. 3 und Fig. 4 greift das Betätigungselement 11 der Aktuatoreinrichtung 9 im ersten Betriebszustand der Aktuatoreinrichtung 9 in ein Langloch 18 ein, das in einem fest mit der Schaltwelle 2 verbundenen Abschnitt 19 vorgesehen ist, um die vordefinierte Drehbewegung der Schaltwelle 2 zum Einlegen des siebten Ganges "7" des Handschaltgetriebes zu sperren. Dieser Betriebszustand der Vorrichtung 1 ist wiederum in Fig. 5 durch den strichliert ausgeführten Bereich des H-Schemas 3 dargestellt, der im ersten Betriebszustand der Aktuatoreinrichtung 9 für den Wählhebel nicht zugänglich ist.

Wird die Aktuatoreinrichtung 9 aus dem in Fig. 4 näher gezeigten ersten Betriebszustand in den zweiten Betriebszustand überführt, wird das Betätigungselement 11 vom Elektromagneten 10 entgegen der Federeinrichtung 12 aus dem Langloch 18 gezogen, womit die definierte Drehbewegung der Schaltwelle 2 in Richtung des Pfeils 16 freigegeben ist, die die Schaltwelle 2 während des vordefinierten Übersetzungswechsels in den siebten Gang "7" ausführt.

Die Länge des Langloches 18 ist derart vorgesehen, dass alle Gänge "1" bis "6" für Vorwärtsfahrt sowie der Gang "R" für Rückwärtsfahrt im ersten Betriebszustand der Aktuatoreinrichtung 9 im Handschaltgetriebe einlegbar sind, während der siebte Gang "7" gesperrt ist.

In Fig. 6 ist das H-Schema 3 vollständig durchgezogen ausgeführt. Diese Darstellung repräsentiert den Betriebszustand der Vorrichtung 1, in dem die Aktuatoreinrichtung 9 sich im zweiten Betriebszustand befindet und zu dem alle Wählgasse 4 bis 8 freigegeben sind.

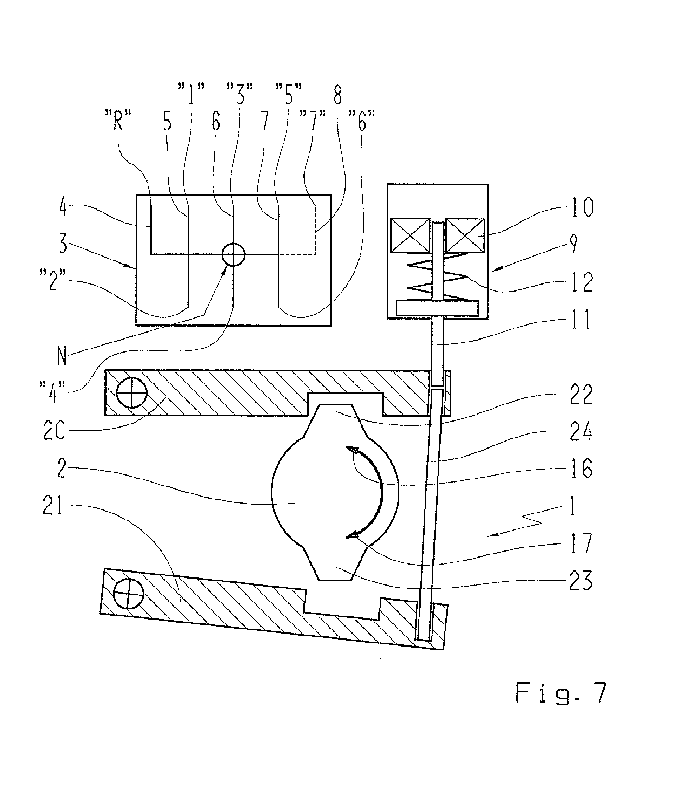

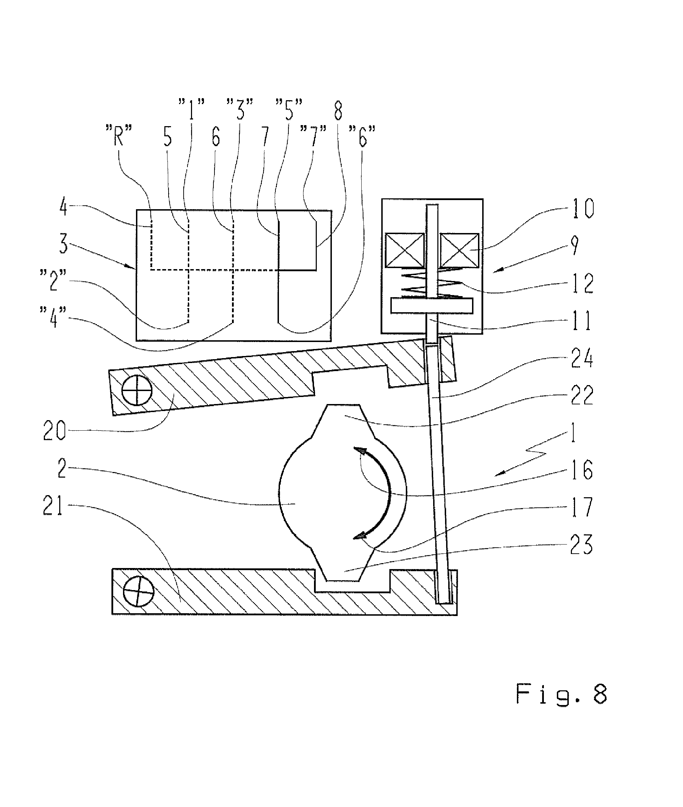

Eine dritte Ausführungsform der Vorrichtung 1 ist in einer im Wesentlichen Fig. 1 entsprechenden Darstellung in Fig. 7 und Fig. 8 gezeigt, bei der das Betätigungselement 11 der Aktuatoreinrichtung 9 mit zwei Hebelelementen 20 und 21 wirkverbunden ist. Dabei wird der vordefinierte Übersetzungswechsel in Richtung des siebten Ganges "7" bei der Vorrichtung 1 gemäß Fig. 7 und Fig. 8 durch Herstellen einer die definierte Drehbewegung der Schaltwelle 2 in Richtung des Pfeils 16 verhindernden Wirkverbindung zwischen der Aktuatoreinrichtung 9 und der Schaltwelle 2 derart unterbunden, dass im ersten Betriebszustand der Aktuatoreinrichtung 9 das über das verschiebbar ausgeführte Betätigungselement 11 der Aktuatoreinrichtung 9 verschwenkbare erste Hebelelement 20 mit einem ersten Bereich 22 der Schaltwelle 2 in Wirkverbindung steht und ein weiterer vordefinierter Übersetzungswechsel, d. h. vorliegend ein Übersetzungswechsel ausgehend vom fünften Gang "5" oder ausgehend vom sechsten Gang "6" in Richtung des vierten Ganges "4" oder eines niedrigeren Ganges sowie des Ganges "R" für Rückwärtsfahrt, im Handschaltgetriebe im zweiten Betriebszustand der Aktuatoreinrichtung 9 dadurch verhindert wird, dass das mit dem Betätigungselement 11 verbundene zweite Hebelelement 21 mit einem zweiten Bereich 23 der Schaltwelle 2 in Wirkverbindung steht. Den ersten Betriebszustand der Aktuatoreinrichtung 9 zeigt Fig. 7, während der zweite Betriebszustand der Aktuatoreinrichtung 9 in Fig. 8 dargestellt ist.

Bei der Vorrichtung 1 gemäß Fig. 7 und Fig. 8 ist das Betätigungselement 11 direkt mit dem ersten Hebelelement 20 fest verbunden und über eine Koppelstange 24 mit dem zweiten Hebelelement 21 gekoppelt, wobei die Koppelstange 24 jeweils fest mit den beiden Hebelelementen 20 und 21 verbunden ist.

Grundsätzlich besteht abweichend von der vorstehenden Beschreibung die Möglichkeit, dass die Aktuatoreinrichtung zur Verhinderung des vordefinierten Übersetzungswechsels, beispielsweise in Richtung des siebten Ganges "7", in Bezug auf einen Innenraum eines Gehäuses des Handschaltgetriebes mit Abschnitten von inneren oder äußeren Bauteilen einer die Schaltwelle umfassenden Schalteinrichtung im ersten Betriebszustand der Aktuatoreinrichtung zusammenwirkt, die wiederum fest mit der Schaltwelle gekoppelt sind. Dabei sind innere oder äußere Bauteile einer Schalteinrichtung beispielsweise äußere oder innere Schalthebel, Schaltwellen, Wählwellen, Zentralschaltwellen oder Schaltfinger.

Die vorbeschriebenen Ausführungsbeispiele der erfindungsgemäßen Vorrichtung sind auch bei Handschaltgetrieben mit mehr als sieben Gängen vorsehbar, um Teilbereiche eines H-Schemas im beschriebenen Umfang in Abhängigkeit einer Fahrerwunschvorgabe zu sperren oder freizugeben und eine Schaltsicherheit bei gleichzeitig hohem Schaltkomfort zu gewährleisten.

Bei weiteren vorteilhaften Ausführungsformen der erfindungsgemäßen Vorrichtung kann es auch vorgesehen sein, dass die Aktuatoreinrichtung hydraulisch oder pneumatisch betätigbar ist und dass die jeweils in Fig. 1 bis Fig. 8 gezeigte einfach wirkende Aktuatoreinrichtung auch doppelt wirkend ausgebildet ist, womit die Rückstellfunktion der Federeinrichtung 12 durch eine entsprechende Ausführung der Aktuatoreinrichtung 9 übernommen wird.

Über die erfindungsgemäße Vorrichtung wird ein sicheres Handling von komplexen H-Schemata unabhängig von Schaltkraft und Schaltgeschwindigkeit zur Verfügung gestellt, um Fehlschaltungen zu vermeiden, die Zugkrafteinbußen zur Folge haben. Des Weiteren ist die erfindungsgemäße Vorrichtung durch einen einfachen Aufbau gekennzeichnet und Mehrfachrückschaltungen aus hohen Gängen, beispielsweise ausgehend vom siebten Gang "7" in den vierten Gang "4" sind bei entsprechender Ausführung der Vorrichtung möglich.

### Bezugszeichen

- 1: Vorrichtung
- 2: Schaltwelle
- 3: H-Schema
- 4 bis 8: Wählgasse
- 9: Aktuatoreinrichtung
- 10: Elektromagnet
- 11: Betätigungselement
- 12: Federeinrichtung
- 13: Fläche
- 14: Mantelfläche
- 15: Abschnitt
- 16, 17: Pfeil
- 18: Langloch
- 19: Abschnitt
- 20, 21: Hebelelement
- 22: erster Bereich
- 23: zweiter Bereich
- 24: Koppelstange
- N: Neutralposition des Wählhebels
- "1" bis "7": Übersetzung für Vorwärtsfahrt
- "R": Übersetzung für Rückwärtsfahrt

## Patentansprüche

1. Vorrichtung (1) für ein Handschaltgetriebe, in dem ein vordefinierter Übersetzungswechsel durch eine definierte Drehbewegung (16) einer Schaltwelle (2) durchführbar ist, wobei eine Aktuatoreinrichtung (9) vorgesehen ist, die in einem ersten Betriebszustand den vordefinierten Übersetzungswechsel verhindert und in einem zweiten Betriebszustand den vordefinierten Übersetzungswechsel zulässt, **dadurch gekennzeichnet, dass** der vordefinierte Übersetzungswechsel durch Herstellen einer die definierte Drehbewegung (16) der Schaltwelle (2) verhindernden Wirkverbindung zwischen der Aktuatoreinrichtung (9) und der Schaltwelle (2) derart unterbunden wird, dass im ersten Betriebszustand der Aktuatoreinrichtung (9) ein verschiebbar ausgeführtes Betätigungselement (11) der Aktuatoreinrichtung (9) in ein Langloch (18) eingreift, das in einem fest mit der Schaltwelle (2) verbundenen Abschnitt (19) vorgesehen ist.

2. Vorrichtung nach Anspruch 1, **dadurch gekennzeichnet, dass** ein zweites Langloch in einem weiteren mit der Schaltwelle fest verbundenen Abschnitt vorgesehen ist, in das das Betätigungselement im ersten Betriebszustand der Aktuatoreinrichtung zur Verhinderung eines weiteren vordefinierten Übersetzungswechsels eingreift.

3. Vorrichtung (1) für ein Handschaltgetriebe, in der ein vordefinierter Übersetzungswechsel durch eine definierte Drehbewegung (16) einer Schaltwelle (2) durchführbar ist, wobei eine Aktuatoreinrichtung (9) vorgesehen ist, die in einem ersten Betriebszustand den vordefinierten Übersetzungswechsel verhindert und in einem zweiten Betriebszustand den vordefinierten Übersetzungswechsel zulässt, **dadurch gekennzeichnet, dass** der vordefinierte Übersetzungswechsel durch Herstellen einer die definierte Drehbewegung (16) der Schaltwelle (2) verhindernden Wirkverbindung zwischen der Aktuatoreinrichtung (9) und der Schaltwelle (2) derart unterbunden wird, dass im ersten Betriebszustand der Aktuatoreinrichtung (9) ein über ein verschiebbar ausgeführtes Betätigungselement (11) der Aktuatoreinrichtung (9) verschwenkbares erstes Hebelelement (20) mit einem ersten Bereich (22) der Schaltwelle (2) in Wirkverbindung steht und ein weiterer vordefinierter Übersetzungswechsel im Handschaltgetriebe im zweiten Betriebszustand der Aktuatoreinrichtung (9) dadurch verhindert wird, dass ein mit dem Betätigungselement (11) verbundenes zweites Hebelelement (21) mit einem zweiten Bereich (23) der Schaltwelle (2) in Wirkverbindung steht.

4. Vorrichtung nach einem der Ansprüche 1 bis 3, **dadurch gekennzeichnet, dass** die Aktuatoreinrichtung zur Verhinderung des vordefinierten Übersetzungswechsels in Bezug auf einen Innenraum eines Gehäuses des Handschaltgetriebes mit Abschnitten von inneren oder äußeren Bauteilen einer die Schaltwelle umfassenden Schalteinrichtung im ersten Betriebszustand zusammenwirkt, die fest mit der Schaltwelle gekoppelt sind.

5. Vorrichtung (1) für ein Handschaltgetriebe, in der ein vordefinierter Übersetzungswechsel durch eine definierte Drehbewegung (16) einer Schaltwelle (2) durchführbar ist, wobei eine Aktuatoreinrichtung (9) vorgesehen ist, die in einem ersten Betriebszustand den vordefinierten Übersetzungswechsel verhindert und in einem zweiten Betriebszustand den vordefinierten Übersetzungswechsel zulässt, **dadurch gekennzeichnet, dass** der vordefinierte Übersetzungswechsel durch Herstellen einer die definierte Drehbewegung (16) der Schaltwelle (2) verhindernden Wirkverbindung zwischen der Aktuatoreinrichtung (9) und der Schaltwelle (2) derart unterbunden wird, dass im ersten Betriebszustand der Aktuatoreinrichtung (9) ein verschiebbar ausgeführtes Betätigungselement (11) der Aktuatoreinrichtung (9) an einer Fläche (13) eines im Bereich einer Mantelfläche (14) der Schaltwelle (2) fest vorgesehenen Abschnittes (15) in Anlage ist.

6. Vorrichtung nach einem der Ansprüche 1 bis 5, **dadurch gekennzeichnet, dass** der vordefinierte Übersetzungswechsel durch Führen eines Wählhebels in eine Wählgasse (8) eines H-Schemas (3) durchführbar ist, die mindestens zwei Wählgassen außerhalb einer Neutralgasse (6) liegt.

7. Vorrichtung nach einem der Ansprüche 1 bis 6, **dadurch gekennzeichnet, dass** die Aktuatoreinrichtung (9) einen elektromechanischen Aktor umfasst.

8. Vorrichtung nach einem der Ansprüche 1 bis 6, **dadurch gekennzeichnet, dass** die Aktuatoreinrichtung hydraulisch oder pneumatisch betätigbar ist.

9. Vorrichtung nach einem der Ansprüche 1 bis 8, **dadurch gekennzeichnet, dass** die Aktuatoreinrichtung einfachwirkend ausgeführt ist.

10. Vorrichtung nach einem der Ansprüche 1 bis 8, **dadurch gekennzeichnet, dass** die Aktuatoreinrichtung doppeltwirkend ausgebildet ist.
